# EUROPÄISCHE PATENTSCHRIFT

(11) **EP 1 881 162 B1**
(45) Veröffentlichungstag und Bekanntmachung des Hinweises auf die Patenterteilung: **05.03.2014**
(21) Anmeldenummer: 07010761.0
(22) Anmeldetag: 31.05.2007
(51) Int. Cl.: F01D 17/16, F02C 6/12

(54) **Abgasturbolader für eine Brennkraftmaschine**
Turbocharger for internal combustion engines
Turbocompresseur pour moteur à combustion interne

(30) Priorität: 22.07.2006 DE 102006033976
(43) Veröffentlichungstag der Anmeldung: 23.01.2008
(73) Patentinhaber: Dr. Ing. h.c. F. Porsche AG, 70435 Stuttgart (DE)
(72) Erfinder: Gröger, Klaus, 71282 Hemmingen (DE); Semmler, Daniel, 70563 Stuttgart (DE)

(56) Entgegenhaltungen:
- EP-A2- 0 976 918
- EP-A2- 1 349 259
- GB-A- 2 033 007
- US-A- 4 655 043
- US-A- 5 701 741

## Beschreibung

Die vorliegende Erfindung betrifft einen Abgasturbolader für eine Brennkraftmaschine.

Ein Turbolader besteht üblicherweise aus einer Abgasturbine im Abgasstrom, die über eine Welle mit einem Verdichter im Ansaugtrakt verbunden ist, und dient zur Leistungssteigerung einer damit ausgestatteten Brennkraftmaschine.

Eine besondere Ausführungsform der Abgasturbolader sind sogenannte VTG-Abgasturbolader, wobei VTG für variable Turbinengeometrie steht. Ein VTG-Abgasturbolader dient prinzipiell dazu, die Leistungsabgabe und das Ansprechverhalten an unterschiedliche Betriebsbedingungen, z.B. Lastwechsel, besser anpassen zu können. Um das zu erreichen, befinden sich verstellbare, nicht rotierende Leitschaufeln im Turbineneintritt oder im Turbinengehäuse, deren Anstellwinkel so eingestellt werden, dass bei wenig asdurchsatz, aber hohem Leistungsbedarf, das Abgas auf die gesamte Fläche der Turbinenschaufel geleitet wird, was die Drehzahl der Turbine und somit die Leistung des Verdichters erhöht. Umgekehrt kann bei hohem Gasdurchsatz und geringem Leistungsbedarf die Strömungsrichtung so verändert werden, dass nur eine kleine Fläche der Turbinenschaufeln mit Abgas beaufschlagt wird, was die Leistung des Laders vermindert.

Aus der EP 1 349 259 A2 ist ein Abgasturbolader mit verstellbarer Turbinengeometrie beschrieben, bei dem zur Verstellung der Leitschaufeln ein Elektromotor vorgesehen ist. Der elektrische Motor ist in einem Gehäuse aufgenommen, das oberhalb vom Verdichtergehäuse positioniert ist. Zur Verstellung der Leitschaufeln ist ein Steuergestänge vorgesehen, um den Trägerring der Leitschaufeln zu verdrehen. In der GB 2 033 007 A ist ein Abgasturbolader beschrieben, bei dem die Ladedruckregelung mit Hilfe eines Ventils erzielt wird, das im Turbinengehäuse aufgenommen ist

Aus der DE 100 48 237 A1 ist eine mit einer Abgasrückführung versehene Brennkraftmaschine bekannt, die einen Abgasturbolader mit variabler Turbinengeometrie aufweist. Zur Verbesserung des Abgasverhaltens ist die Abgasturbine mit zwei separaten, druckdicht gegeneinander abgeschirmten Einströmkanälen ausgebildet, wobei ein Einströmkanal mit einer Abgasleitung kommuniziert, von der eine Rückführungsleitung der Abgasrückführung abzweigt. Dadurch sind zwei unabhängige Abgasleitungen zwischen den Zylinderauslässen der Brennkraftmaschine und der Abgasturbine vorzusehen, die jeden Einströmkanal separat mit Abgas versorgen.

Aus der DE 102 53 693 A1 und der DE 100 61 846 A1 sind weitere Abgasturbolader für Brennkraftmaschinen bekannt.

Aufgrund der immer beengter werdenden Platzverhältnisse innerhalb eines Motorraumes, ist es wünschenswert, Motorzubehörteile, wie beispielsweise einen Abgasturbolader, möglichst bauraumminimierend unterzubringen.

Die vorliegende Erfindung beschäftigt sich mit dem Problem, einen Abgasturbolader bereit zu stellen, welcher besonders platzsparend im Motorraum untergebracht ist.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, zumindest einen Teil eines Abgasturboladers in ein Verdichtergehäuse zu integrieren. Der Abgasturbolader weist dabei eine Abgasturbine mit einer veränderbaren Turbinengeometrie und einen elektrischen Stellantrieb auf, der zum Verändern der Turbinengeometrie ausgebildet ist. Darüber hinaus weist der Abgasturbolader einen von der Abgasturbine angetriebenen Verdichter auf, der ein Verdichtergehäuse mit einem drehbar gelagerten Verdichterrad umfasst. Der Stellantrieb zum Verändern der Turbinengeometrie umfasst zumindest ein Gehäuse und einen davon abnehmbaren Gehäusedeckel, wobei erfindungsgemäß vorgesehen ist, dass das Gehäuse des Stellantriebes einen integralen Bestandteil des Verdichtergehäuses bildet. Durch die zumindest teilweise Integration des Stellantriebes in das Verdichtergehäuse baut die aus Verdichtergehäuse und Stellantrieb gebildete Einheit deutlich kompakter, wodurch eine besonders bauraumminimierende Bauweise erreicht werden kann. Im Vergleich zu herkömmlichen Abgasturboladern mit separat aufgesetzten Stellantrieben zeigt sich eine deutliche Bauraumreduzierung.

Weiterhin weist der Stellantrieb erfindungsgemäß ein Getriebe auf, das zumindest ein Zahnrad umfasst. Das Getriebe erlaubt eine zuverlässige und besonders exakte Einstellung der Turbinengeometrie, insbesondere eines Leitschaufelkranzes. Gleichzeitig lassen sich die Zahnräder für das Getriebe kostengünstig und in nahezu jeder beliebiger Ausführungsform fertigen, wodurch eine hohe konstruktive Freiheit erreicht wird.

Bei einer vorteilhaften Ausführungsform der erfindungsgemäßen Lösung ist ein Zahnrad des Getriebes auf einer Welle montiert, welche auf einer dem Zahnrad abgewandten Seite das Gehäuse des Stellantriebes durchdringt und mit einem Stellhebel zur Verstellung der Turbinengeometrie wirkungsverbunden ist. Das Gehäuse des Stellantriebes, welches einen integralen Bestandteil des Verdichtergehäuses bildet, kann somit gleichzeitig zur Lagerung einer Zahnradwelle genutzt werden, wodurch eine besonders zuverlässige Kraftübertragung zwischen der Welle und dem Stellhebel erreicht wird, da die Welle bezüglich des Verdichtergehäuses lagepositioniert ist. Im Vergleich zu herkömmlichen Abgasladern, bei welchen der Stellantrieb als separates Bauteil ausgebildet ist, kann beim erfindungsgemäßen Abgasturbolader auch eine exaktere Übertragung der Verstellbewegung des Stellhebels gewährleistet werden, da keine Relativbewegungen zwischen Stellantrieb und Verdichtergehäuse möglich sind, wie dies beispielsweise bei herkömmlichen Abgasturboladern der Fall ist.

Weitere wichtige Merkmale und Vorteile der Erfindung ergeben sich aus den weiteren Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf einen erfindungsgemäßen Abgasturbolader mit einem Stellantrieb,
- Fig. 2: einen Längsschnitt durch den Abgasturbolader.

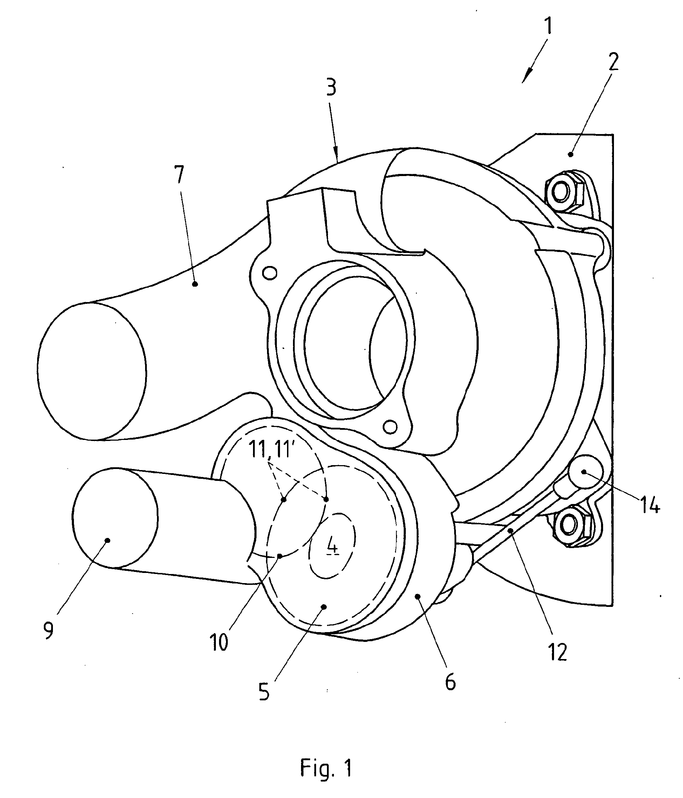

Entsprechend der Fig. 1 weist ein Abgasturbolader 1 für eine nicht gezeigte Brennkraftmaschine eine Abgasturbine 2 und einen Verdichter 3 auf. Die Abgasturbine 2 wird durch einen nicht gezeigten Abgasstrom angetrieben und treibt ihrerseits den Verdichter 3 an, der seinerseits die angesaugte Luft verdichtet und in die Brennkraftmaschine zur Verbrennung einleitet. Im Inneren der beiden Komponenten dreht sich jeweils ein Flügel- bzw. Schaufelrad, das die Strömungsenergie in eine Drehbewegung umsetzt bzw. beim Abgasturbolader 1 umgekehrt die Drehbewegung in Strömungsarbeit umsetzt. Die Abgasturbine 2 besitzt dabei eine veränderbare Turbinengeometrie, welche von einem elektrischen Stellantrieb 4 verändert werden kann. Der Stellantrieb 4 ist dabei so ausgebildet, dass er vorzugsweise auf einen nicht gezeigten Leitschaufelkranz der Abgasturbine 2 einwirkt und diesen verstellt.

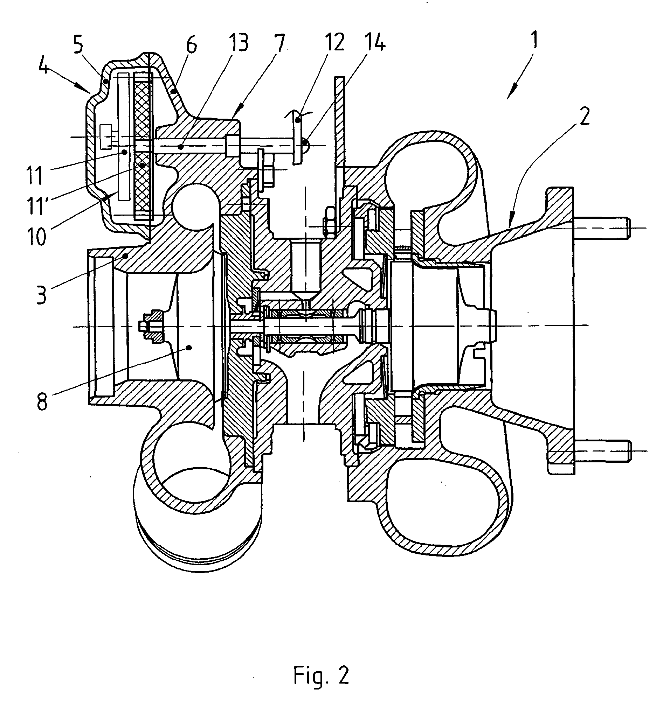

Der elektrische Stellantrieb 4 weist einen abnehmbaren Gehäusedeckel 5 und ein Gehäuse 6 auf, das einen integralen Bestandteil eines Verdichtergehäuses 7 bildet. Der Verdichter 3 umfasst prinzipiell nicht nur eben genanntes Verdichtergehäuse 7 sondern auch ein innerhalb des Verdichtergehäuses 7 drehbar gelagertes Verdichterrad 8 (vgl. Fig. 2). In Fig. 1 ist dabei ein Abgasturbolader 1 mit komplett angebautem Stellantrieb 4 gezeigt.

Wie der Fig. 1 weiter zu entnehmen ist, ist am Gehäusedeckel 5 eine gehäuseartige Aufnahme 9 vorgesehen, innerhalb welcher beispielsweise ein Elektromotor angeordnet ist, der die eigentliche Stellbewegung des Stellantriebes 4 erzeugt. Der Elektromotor wirkt dabei auf ein Getriebe 10 ein, welches im Gehäuse 6 des elektrischen Stellantriebes 4 angeordnet ist und gemäß der Fig. 1 lediglich durch unterbrochen gezeichnete Linien angedeutet ist. Das Getriebe 10 kann dabei mehrere Zahnräder 11 und 11' umfassen, welche eine entsprechend übersetzte Übertragung der vom Elektromotor ausgehenden Drehbewegung auf einen Stellhebel 12 bewirken. Der Stellhebel 12 ist wiederum mit einer Verstelleinrichtung zum Verstellen des Leitschaufelkranzes der Abgasturbine 2 verbunden.

In der gehäuseartigen Aufnahme 9 ist, wie oben beschrieben, der Elektromotor angeordnet, und dadurch fest mit dem abnehmbaren Gehäusedeckel 5 des elektrischen Stellantriebes 4 verbunden. Ein Entfernen des Elektromotors erfolgt somit durch ein einfaches Abnehmen des Gehäusedeckels 5.

Betrachtet man Fig. 2, so wird deutlich, dass das Gehäuse 6 des Stellantriebes 4 in das Verdichtergehäuse 7 integriert ist. Insbesondere lässt sich der Fig. 2 deutlich entnehmen, dass ein Zahnrad 11 des Getriebes 10 auf einer Welle 13 montiert ist, die auf einer dem Zahnrad 11 abgewandten Seite das Gehäuse 6 des Stellantriebes 4 durchdringt und mit dem oben erwähnten Stellhebel 12 zur Verstellung der Turbinengeometrie wirkungsverbunden ist. Eine Verbindung zwischen dem Stellhebel 12 und der Welle 13 kann dabei beispielsweise über ein Kugelgelenk 14 erfolgen, welches eine zuverlässige Übertragung der Stellbewegung erlaubt und darüber hinaus gewisse Toleranzen auszugleichen vermag. Die Welle 13 verläuft dabei im wesentlichen parallel zu einer Welle 13' des Verdichters 3 bzw. der Abgasturbine 2. Durch die Integration des Gehäuses 6 in das Verdichtergehäuse 7 kann eine besonders kompakte Bauweise erreicht werden, wodurch der erforderliche Bauraum für den Abgasturbolader 1 deutlich reduziert werden kann. Gleichzeitig entfällt das separate Herstellen eines Gehäuses für den elektrischen Stellantrieb 4, da dieses bereits in vorzugsweise einem einzigen Arbeitsschritt zusammen mit dem Verdichtergehäuse 7 hergestellt wird. Nach dem Einsetzen des Getriebes 10 in das Gehäuse 6 muss daher lediglich noch die Welle 13 mit dem Stellhebel 12 wirkungsverbunden werden und der Gehäusedeckel 5 mit dem darin angeordneten Elektromotor zur Betätigung des Getriebes auf dem Gehäuse 6 aufgebracht werden. Im Vergleich zu einer herkömmlichen Montage eines separat vorgefertigten Abgasturboladers kann dadurch die Fertigungszeit deutlich reduziert werden.

Zusammenfassend lassen sich die wesentlichen Merkmale der erfindungsgemäßen Lösung wie folgt charakterisieren:

Die Erfindung sieht vor, einen Teil des Stellantriebes 4 zum Verändern der Turbinengeometrie der Abgasturbine 2 als integralen Bestandteil des Verdichtergehäuses 7 auszubilden und dadurch eine besonders kompakte Bauweise des so ausgestalteten Abgasturboladers 1 zu erreichen. Ein bisher für einen separaten Stellantrieb vorgesehenes Gehäuseteil entfällt somit, wodurch sich die Teilevielfalt und die Fertigungskosten reduzieren lassen.

## Patentansprüche

1. Abgasturbolader (1) für eine Brennkraftrnaschine, mit
- einer eine veränderbare Turbinengeometrie aufweisenden Abgasturbine (2) und einem elektrischen Stellantrieb (4) zum Verändern der Turbinengeometrie,
- einem von der Abgasturbine (2) angegebenen Verdichter (3), der ein Verdichltergehäuse (7) mit einem drehbar gelagerten Verdichterrad (8) umfasst, **dadurch gekennzeichnet, dass**
- der Stellantrieb (4) einen abnehmbaren Gehäusedeckel (5) und ein Gehäuse (6) anfweist, das einen integralen Bestandteil des Verdichtergehäuses (7) bildet, wobei
- der Stellantrieb (4) ein Getriebe (10) aufweist, welches zumindest ein Zahnrad (11,11') umfasst, und
- das zumindest eine Zahnrad (11,11') des Getriebes (10) drehbar am Verdichtergehäuse (7) gelagert ist.

2. Abgasturbolader nach Anspruch 1, **dadurch gekennzeichnet, dass** der Stellantrieb (4) einen Elektromotor aufweist, welcher in den abnehmbaren Gehäusedeckel (5) eingebaut ist.

3. Abgasturbolader nach Anspruch 1 oder 2, **dadurch gekennzeichnet, dass** der Stellantrieb (4) so ausgebildet ist, dass er einen Leitschaufelkranz der Abgasturbine (2) verstellt.

4. Abgasturbolader nach einem der Ansprüche 1 bis 3, **dadurch gekennzeichnet, dass** ein Zahnrad (11) des Getriebes (10) auf einer Welle (13) montiert ist, welche auf einer dem Zahnrad (11) abgewandten Seite das Gehäuse (6) des Stellantriebs (4) durchdringt und mit einem Stellhebel (12) zur Verstellung der Turbinengeometrie wirkungsverbunden ist.

5. Brennkraftmaschine mit einem Abgasturbolader nach einem der Ansprüche 1 bis 4.

## Claims

1. Exhaust-gas turbocharger (1) for an internal combustion engine, having
- an exhaust-gas turbine (2) which has a variable turbine geometry, and an electric actuating drive (4) for varying the turbine geometry,
- a compressor (3) which is driven by the exhaust-gas turbine (2) and which comprises a compressor housing (7) with a rotatably mounted compressor wheel (8),
**characterized in that**
- the actuating drive (4) has a removable housing cover (5) and a housing (6) which forms an integral constituent part of the compressor housing (7), wherein
- the actuating drive (4) has a gearing (10) which comprises at least one gearwheel (11, 11'), and
- the at least one gearwheel (11, 11') of the gearing (10) is rotatably mounted on the compressor housing (7).

2. Exhaust-gas turbocharger according to Claim 1, **characterized in that** the actuating drive (4) has an electric motor which is installed in the removable housing cover (5).

3. Exhaust-gas turbocharger according to Claim 1 or 2, **characterized in that** the actuating drive (4) is designed so as to adjust a guide blade ring of the exhaust-gas turbine (2).

4. Exhaust-gas turbocharger according to one of Claims 1 to 3, **characterized in that** a gearwheel (11) of the gearing (10) is mounted on a shaft (13) which, on a side facing away from the gearwheel (11), extends through the housing (6) of the actuating drive (4) and is operatively connected to an actuating lever (12) for the adjustment of the turbine geometry.

5. Internal combustion engine having an exhaust-gas turbocharger according to one of Claims 1 to 4.

## Revendications

1. Turbocompresseur de gaz d'échappement (1) pour moteur à combustion interne, avec :
- une turbine de gaz d'échappement (2) comportant une géométrie de turbine variable et un entraînement de réglage électrique (4) permettant de faire varier la géométrie de turbine ;
- un compresseur (3) entraîné par la turbine de gaz d'échappement (2), ledit compresseur comprenant un carter de compresseur (7) doté d'une roue de compresseur (8) disposée de façon à pouvoir tourner ;
**caractérisé en ce que** :
- l'entraînement de réglage (4) comporte un cache de carter (5) amovible et un carter (6) faisant partie intégrante du carter de compresseur (7) ;
- l'entraînement de réglage (4) comporte un engrenage (10) comprenant au moins une roue dentée (11, 11') ; et
- l'au moins une roue dentée (11, 11') de l'engrenage (10) est disposée de façon à pouvoir tourner au niveau du carter de compresseur (7).

2. Turbocompresseur de gaz d'échappement selon la revendication 1, **caractérisé en ce que** l'entraînement de réglage (4) comporte un moteur électrique intégré dans le cache de carter (5) amovible.

3. Turbocompresseur de gaz d'échappement selon la revendication 1 ou 2, **caractérisé en ce que** l'entraînement de réglage (4) est réalisé de telle sorte qu'il règle une couronne à boucle conductrice de la turbine de gaz d'échappement (2).

4. Turbocompresseur de gaz d'échappement selon l'une quelconque des revendications 1 à 3, **caractérisé en ce qu'**une roue dentée (11) de l'engrenage (10) est montée sur un arbre (13) pénétrant le carter (6) de l'entraînement de réglage (4) sur un côté opposé à la roue dentée (11) et est activement reliée à un levier de réglage (12) en vue de réaliser le réglage de la géométrie de turbine.

5. Moteur à combustion interne doté d'un turbocompresseur de gaz d'échappement selon l'une quelconque des revendications 1 à 4.
